# EUROPÄISCHE PATENTSCHRIFT

(11) **EP 1 344 443 B1**
(45) Veröffentlichungstag und Bekanntmachung des Hinweises auf die Patenterteilung: **08.11.2006**
(21) Anmeldenummer: 03005029.8
(22) Anmeldetag: 06.03.2003
(51) Int. Cl.: A01B 33/08, A01B 61/02

(54) **Bodenbearbeitungsgerät**
Soil working implement
Outil pour le travail du sol

(30) Priorität: 12.03.2002 DE 10210850; 12.03.2002 DE 20203971 U
(43) Veröffentlichungstag der Anmeldung: 17.09.2003
(73) Patentinhaber: Lemken GmbH & Co. KG, 46519 Alpen (DE)
(72) Erfinder: Gebbeken, Martin, 46519 Alpen (DE); Giesen, Gottfried, 47495 Rheinberg (DE)
(74) Vertreter: Schulte, Jörg

(56) Entgegenhaltungen:
- EP-A- 0 175 916
- EP-A- 0 838 141
- WO-A-99/23869
- US-A- 4 188 821
- US-A- 4 953 411

## Beschreibung

Die Erfindung betrifft ein Bodenbearbeitungsgerät mit rotierenden Arbeitswerkzeugen mit einer Überlastsicherung, die das in das Getriebe eingeleitete Antriebsdrehmoment begrenzt und einer das Antriebsdrehmoment erfassenden und ggf. unterbrechenden Vorrichtung.

Dem Prospekt "Kreiselegge" der Amazonen-Werke mit dem Druckvermerk D618*5.90 ist ein derartiges Bodenbearbeitungsgerät zu entnehmen, bei dem zwischen dem Antriebsstrang der Kreiselegge und dem Antriebsstrang des Traktors eine Gelenkwelle mit Überlastsicherung montiert ist. Bei dieser Kreiselegge kommen Überlastsicherungen als Reibkupplungen mit Reibbelägen und als Schaltkupplungen zum Einsatz, die bei Erreichen eines Antriebsmomentgrenzwertes ansprechen, die aber keine Unterbrechung des Antriebsdrehmomentes bewirken und so zu Verschleiß der Reibbeläge und zum Verschleiß und zu Beschädigungen der Bauteile führen, die mit Federkraft beaufschlagt werden. Insbesondere, wenn das Antriebsmomentlimit sehr hoch eingestellt ist und das entsprechende Bodenbearbeitungsgerät an einem Traktor eingesetzt wird, der eine im Durchmesser kleine Zapfwelle aufweist, schützt diese Art der Überlastsicherung nur das Gerät, nicht den Traktor. Alle derartigen Überlastsysteme weisen den Nachteil auf, dass bei unbemerktem, spät bemerktem oder häufigem Ansprechen der Überlastsicherung diese verschleißt, in ihrer Wirkung nachlässt oder gar beschädigt wird. US-PS 4,953,411, US-PS 4,188,821, EP 0 175 916-A1 und WO 99/23869 A verfügen über eine Vorrichtung zur Erfassung und Regelung des Antriebsdrehmomentes. Auch eine Unterbrechung des Antriebsdrehmomentes ist vorgesehen. In der EP 0 838 141 A2 ist ein BUS-System zur Überwachung aller Teile des Gesamtgerätes vorgeschlagen, also auch des Antriebsdrehmomentes. Beim Wiedereinschalten des Gerätes nach dem Stillstand kann es aber zu Problemen kommen.

Aufgabe der Erfindung ist es, eine Sicherung zu schaffen, die bei Überlastung spontan anspricht, die keinem Verschleiß unterworfen ist und die sowohl den traktorseitigen Antriebsstrang für die Zapfwelle als auch den geräteseitigen Antriebsstrang für die rotierenden Arbeitswerkzeuge und diese selbst vor Überlastung schützt.

Die Aufgabe wird dadurch, wie beansprucht, gelöst, dass dem Antriebsstrang eine Messeinrichtung oder Einrichtung zugeordnet ist, die das Antriebsdrehmoment erfasst und bei Erreichen oder Überschreiten eines vorzugsweise vorgebbaren Drehmomentwertes das Antriebsdrehmoment über die Zapfwellenkupplung des Traktors oder eine andere traktorseitig angeordnete das Antriebsdrehmoment des Traktors übertragende Vorrichtung unterbrechend ausgebildet ist., wobei die das Antriebsdrehmoment des Traktors übertragende Vorrichtung als eine bei Erreichen oder Überschreiten des Drehmomentes eine kurzzeitige Drehrichtungsumkehr der Arbeitswerkzeuge bewirkende und dem Antriebsstrang zugeordnete Schaltvorrichtung ausgebildet ist.

Durch das Vorsehen der Messeinrichtung oder ähnlichen Einrichtung kann vorteilhaft der aktuelle Belastungszustand ermittelt werden, und zwar als verwertbares Signal, das bei einer Überlastung des Antriebsstranges dazu genutzt wird, die Zapfwellenkupplung des Traktors bzw. eine andere traktorseitig angeordnete, das Antriebsdrehmoment des Traktors übertragende Vorrichtung zu unterbrechen bzw. zu trennen, wobei durch das Vorsehen einer Schaltvorrichtung, die bei Erreichen eines Drehmomentgrenzwertes eine Drehrichtungsumkehr der rotierenden Werkzeuge bewirkt, eventuell eingeklemmte Steine oder andere Bodenhindernisse wieder frei gegeben werden, ohne dabei den Arbeitsfluss unterbrechen zu müssen. Ohne dass der Traktorfahrer aktiv werden muss, wird danach das Antriebsdrehmoment wieder erhöht und die ursprüngliche Drehrichtung der rotierenden Werkzeuge wieder eingestellt. Dabei ist erfindungsgemäß vorgesehen, dass die Drehrichtungsumkehr der rotierenden Arbeitswerkzeuge auf 10 % bis 100 % einer Werkzeugumdrehung eingestellt ist, vorzugsweise auf 50 %.

Die Erfindung sieht weiter vor, dass die Messeinrichtung als Bestandteil der Gelenkwelle oder als Messnabe ausgebildet ist, die vor dem Getriebe vorzugsweise auf der Eingangswelle angeordnet ist. Durch das Vorsehen der Messeinrichtung in der zuvor beschriebenen Weise ist ein einfacher Anbau möglich, auch ohne umfangreiche Änderungen an der Getriebekonstruktion und an den anderen Komponenten des Antriebsstranges vornehmen zu müssen. Des weiteren können so bereits auf dem Markt befindliche Bodenbearbeitungsgeräte nachträglich mit einer erfindungsgemäßen Überlastsicherung ausgerüstet werden.

Eine sichere Anordnung der Einrichtung ist möglich, wenn die Messeinrichtung als Bestandteil des Getriebes ausgebildet ist. Durch diese Ausführungsform ist zwar eine Nachrüstung von bereits auf dem Markt befindlichen Bodenbearbeitungsgeräten erschwert, jedoch kann so die Messeinrichtung im Getriebe geschützt untergebracht werden und kann so auch zu einer kompakten Einheit zusammengefasst auf andere Bodenbearbeitungsgeräte aufgebaut werden.

Die Erfindung sieht weiter vor, dass sowohl das Bodenbearbeitungsgerät als auch der Traktor jeweils mit einem Jobrechner ausgerüstet sind, die über ein BUS-System miteinander verbunden sind, dass eine Eingabeeinheit vorgesehen ist für die Eingabe der erforderlichen Betriebsparameter und dass die Zapfwellenkupplung des Traktors als elektromagnetisch betätigbare Zapfwellenkupplung ausgebildet ist. Über das BUS-System mit den beiden Jobrechnern können diese miteinander kommunizieren. Mit der Eingabeeinheit können die gerätespezifischen und die traktorspezifischen Parameter eingegeben werden, so dass mit Rücksicht auf das schwächste Glied im Antriebsstrang des Traktors und des Bodenbearbeitungsgerätes bei Erreichen eines maximal zulässigen Antriebsdrehmomentes eine Unterbrechung des Antriebes erfolgt. Dabei wird ein Signal erzeugt, das für ein Trennen der Zapfwellenkupplung sorgt, die vorzugsweise elektromagnetisch betätigbar ist. Dadurch dass das System insgesamt Rücksicht auf den schwächsten Antriebsstrang nimmt, können keine Beschädigungen am Traktor und am Bodenbearbeitungsgerät auftreten.

Ein versehentliches Wiederinbetriebnehmen ist ausgeschlossen, weil die Zapfwellenkupplung des Traktors nach einer Unterbrechung des Antriebes nur manuell, vorzugsweise per Knopfdruck, wieder aktivierbar ausgebildet ist. Durch diese Maßnahme ist es für den Betreiber möglich, die Ursache einer Überlastung zu untersuchen, ohne bei Beseitigung der Störung befürchten zu müssen, dass die rotierenden Arbeitswerkzeuge versehentlich aktiviert werden. Dadurch wird in derartigen Situationen eine Verletzungsgefahr für den Betreiber ausgeschlossen.

Die Erfindung sieht weiter vor, dass die Messeinrichtung über ein GPS-System bezüglich des vorzugebenden Drehmomentwertes einstellbar und diesen dabei teilflächenspezifisch über eine Feldkarte den dem jeweiligen Feldbereich vorliegenden Bodenbedingungen anpassend ausgebildet ist. Somit kann beispielsweise in einem Feldbereich mit leichten Bodenverhältnissen und hohem Steinbesatz mit einem geringeren Drehmomentlimit gearbeitet werden, als in schweren Bodenverhältnissen ohne Steinbesatz. Die Überlastsicherung der Antriebsstränge wird so immer auf die gerade vorliegenden Bodenverhältnisse optimal abgestimmt.

Die Erfindung sieht weiter vor, dass die Messeinrichtung das Signal für die Unterbrechung des Antriebsmomentes der Zapfwellenkupplung des Traktors drehzahlabhängig und/oder abhängig von dem zeitlichen Anstieg des Antriebsmomentwertes erzeugend ausgebildet ist. So kann zusätzlich das Überlastsystem intelligent auf die jeweils vorliegenden Situationen reagieren. Steigt das Drehmoment in sehr kurzer Zeit sehr hoch an, so wird dies als Bodenhindernis erkannt und sorgt für ein rechtzeitiges Trennen der Zapfwellenkupplung. Steigt das Antriebsmoment jedoch weicher an, so erkennt das System, dass die Maschine zurzeit in schwereren Bodenverhältnissen arbeitet und sorgt so für ein erhöhtes Antriebsmomentlimit. Ein ständiges Anspringen der Überlastsicherung in extrem schweren aber steinlosen Bodenverhältnissen braucht so nicht befürchtet werden.

Eine kurzfristig notwendige Anpassung des Drehmomentwertes ist möglich, weil die Messeinrichtung bezüglich des Drehmomentwertes auch manuell einstellbar ausgebildet ist, vorzugsweise in Prozentstufen. So besteht die Möglichkeit, im Einzelfall das Drehmomentlimit aktuellen Zuständen anzupassen, die z.B. nicht auf der Feldkarte Berücksichtigung gefunden haben.

Eine weitere Lösung der Aufgabe ist die, bei der am Getriebegehäuse eine Messeinrichtung für die Messung der Spannung im Getriebegehäuse vorgesehen ist, die bei Erreichen einer Grenzspannung eine Trennung der Zapfwellenkupplung des Traktors und damit eine Unterbrechung des Antriebsmomentes über ein BUS-System mit Jobrechner bewirkend ausgebildet ist. So braucht keine teurere Messnabe im System untergebracht werden, sondern über einen mit einem Dehnungsmessstreifen vergleichbaren Messaufnehmer werden die auf das Getriebegehäuse einwirkenden Belastungsspannungen genutzt, um bei Erreichen eines Limitwertes für die Trennung der Zapfwellenkupplung zu sorgen.

Insgesamt ist so ein Bodenbearbeitungsgerät geschaffen, das über die BUS-Technologie sowohl den Traktor als auch das Gerät, und zwar bezogen auf den jeweiligen Antriebsstrang vor Überlastung schützt, und zwar kostengünstig.

Weitere Einzelheiten und Vorteile des Erfindungsgegenstandes ergeben sich aus der nachfolgenden Beschreibung und der zugehörigen Zeichnung, in der die notwendigen Einzelheiten und Einzelteile dargestellt sind.

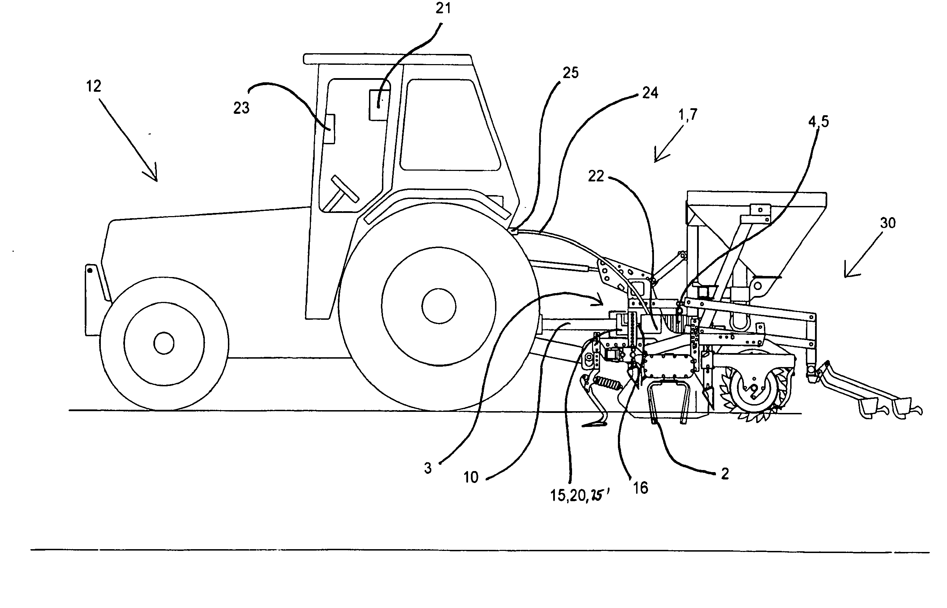

Die einzige Figur zeigt einen Traktor (12) mit angebautem Bodenbearbeitungsgerät (1). Bei dem Bodenbearbeitungsgerät (1) handelt es sich um eine Kreiselegge (7) mit rotierenden Arbeitswerkzeugen (2). Auf der Kreiselegge (7) ist eine handelsübliche Drillmaschine (30) aufgebaut. Der Antrieb der rotierenden Arbeitswerkzeuge (2) erfolgt über den Antriebsstrang (3). Der Antriebsstrang (3) besteht aus der nicht dargestellten Zapfwelle des Traktors (12), der Gelenkwelle (10), dem Getriebe (4) mit der nicht dargestellten Eingangswelle des Getriebes (4) und der nicht dargestellten Ausgangswelle des Getriebes (4). Das Bodenbearbeitungsgerät (1) ist mit einem Jobrechner (22) ausgerüstet, das mit einem Verbindungskabel (24) mit der Steckdose (25) des Traktors (12) verbunden ist. Über die Verbindungsleitung (24) und der Steckdose (25) wird eine direkte Verbindung zum Jobrechner (21) des Traktors (12) hergestellt. Die beiden Jobrechner (21, 22) können miteinander kommunizieren gemäß einem BUS-Standard, wie z.B. ISOBUS. Die für den Betrieb des Systems erforderlichen Parameter werden über die Eingabeeinheit (23) eingegeben. Diese Eingabeeinheit (23) beinhaltet ein Display, auf dem die jeweiligen Betriebszustände abgelesen werden können. Das während der Arbeit auftretende Antriebsdrehmoment wird von einer Messeinrichtung (15) erfasst. Die Messeinrichtung (15) besteht in diesem Fall aus einer Messnabe (20), die vor dem Getriebe (4) auf der Eingangswelle des Getriebes (4) angeordnet ist. Die von der Messeinrichtung (15) abgegebenen Signale werden über eine Leitung (16) auf den Jobrechner (22) übertragen.

Bei Erreichen eines vorgegebenen Antriebsmomentlimits wird über die Jobrechner (22) und (23) eine Trennung der Zapfwellenkupplung bewirkt. Dazu muss die Zapfwellenkupplung elektromagnetisch betätigbar sein oder andere Mittel aufweisen, um eine unmittelbare Trennung der Zapfwellenkupplung zu bewirken.

Statt der Messeinrichtung mit Messnabe (20) kann eine Messeinrichtung (15') dem Getriebegehäuse (5) zugeordnet werden, um die Spannung zu überwachen und bei überschreiten einer Grenzspannung des Antriebsmoment zu unterbrechen.

## Patentansprüche

1. Bodenbearbeitungsgerät (1) mit rotierenden Arbeitswerkzeugen (2), mit einem Antriebsstrang (3), der aus einem Getriebe (4) mit Eingangswelle und Ausgangswelle besteht, wobei über die Ausgangswelle die rotierenden Arbeitswerkzeuge (2) angetrieben werden und mit einer Gelenkwelle (10), die zum einen mit der Eingangswelle des Getriebes (4) und zum anderen mit der Zapfwelle eines Traktors (12) verbindbar ausgebildet ist und mit einer Überlastsicherung, die das in das Getriebe (4) eingeleitete Antriebsdrehmoment begrenzt,
**dadurch gekennzeichnet,**
**dass** dem Antriebsstrang (3) eine Messeinrichtung (15) oder Einrichtung zugeordnet ist, die das Antriebsdrehmoment erfassend und bei Erreichen oder Überschreiten eines vorgebbaren Drehmomentwertes das Antriebsdrehmoment über die Zapfwellenkupplung des Traktors (12) oder eine andere traktorseitig angeordnete, das Antriebsdrehmoment des Traktors (12) übertragende Vorrichtung unterbrechend ausgebildet ist, wobei die das Antriebsdrehmoment des Traktors (12) übertragende Vorrichtung als eine bei Erreichen oder Überschreiten des vorgebbaren Drehmomentwertes eine kurzzeitige Drehrichtungsumkehr der Arbeitswerkzeuge (2) bewirkende und dem Antriebsstrang zugeordnete Schaltvorrichtung ausgebildet ist.

2. Bodenbearbeitungsgerät nach Anspruch 1,
**dadurch gekennzeichnet,**
**dass** die Messeinrichtung (15) als Bestandteil der Gelenkwelle (10) oder als Messnabe (20) ausgebildet ist, die vor dem Getriebe (4), vorzugsweise auf der Eingangswelle angeordnet ist.

3. Bodenbearbeitungsgerät nach Anspruch 1,
**dadurch gekennzeichnet,**
**dass** die Messeinrichtung (15) als Bestandteil des Getriebes (4) ausgebildet ist.

4. Bodenbearbeitungsgerät nach Anspruch 1,
**dadurch gekennzeichnet,**
**dass** sowohl das Bodenbearbeitungsgerät (1) als auch der Traktor (12) jeweils mit einem Jobrechner (21, 22) ausgerüstet sind, die über ein BUS-System miteinander verbunden sind, dass eine Eingabeeinheit (23) für die Eingabe der erforderlichen Betriebsparameter vorgesehen ist und dass die Zapfwellenkupplung des Traktors (15) als elektromagnetisch betätigbare Zapfwellenkupplung ausgebildet ist.

5. Bodenbearbeitungsgerät nach Anspruch 5,
**dadurch gekennzeichnet,**
**dass** die Zapfwellenkupplung des Traktors (12) nach einer Unterbrechung des Antriebes nur manuell, vorzugsweise per Knopfdruck wieder aktivierbar ausgebildet ist.

6. Bodenbearbeitungsgerät nach Anspruch 1,
**dadurch gekennzeichnet,**
**dass** die Messeinrichtung (15) über ein GPS-System bezüglich des vorzugebenden Drehmomentwertes einstellbar und diesen dabei teilflächenspezifisch über eine Feldkarte den dem jeweiligen Feldbereich vorliegenden Bodenbedingungen anpassend ausgebildet ist.

7. Bodenbearbeitungsgerät nach Anspruch 1,
**dadurch gekennzeichnet,**
**dass** die Messeinrichtung (15) das Signal für die Unterbrechung des Antriebsmomentes der Zapfwellenkupplung des Traktors (12) drehzahlabhängig und/oder abhängig von dem zeitlichen Anstieg des Antriebsmomentwertes erzeugend ausgebildet ist.

8. Bodenbearbeitungsgerät nach Anspruch 1,
**dadurch gekennzeichnet, dass** die Messeinrichtung (15) bezüglich des Drehmomentwertes auch manuell einstellbar ist, vorzugsweise in Prozentstufen.

9. Bodenbearbeitungsgerät nach Anspruch 1,
**dadurch gekennzeichnet,**
**dass** die Messeinrichtung (15') die Spannung im Getriebegehäuse (5) erfassend ausgebildet ist, die bei Erreichen einer Grenzspannung eine Trennung der Zapfwellenkupplung des Traktors (12) und damit eine Unterbrechung des Antriebsmomentes über ein BUS-System mit Jobrechner (21, 22) bewirkend ausgebildet ist.

## Claims

1. Soil processing apparatus (1) with rotating working tools (2), with a power train (3) consisting of a gear mechanism (4) with an input shaft and an output shaft, the working tools (2) being operated via the output shaft, and with an articulated shaft (10) which is designed so as to be connectable on the one hand to the input shaft of the gear mechanism (4) and on the other hand to the power take-off shaft of a tractor (12), and with an overload protection device which restricts the drive torque introduced into the gear mechanism (4),
**characterized in that**
a measuring equipment (15) or equipment is associated with the power train (3), which equipment is designed to record the drive torque and upon reaching or exceeding a predeterminable torque value to interrupt the drive toque via the power take-off shaft coupling of the tractor (12) or another device arranged on the tractor side that transmits the drive torque of the tractor (12), where the device transmitting the drive torque of the tractor is designed as a switching device (1) that brings about a brief reversal of the direction of rotation of the working tools (2) upon reaching or exceeding the predeterminable torque value

2. Soil processing apparatus according to claim 1,
**characterized in that**
the measuring equipment (15) is designed as a component of the articulated shaft (10) or as a measuring hub (20) that is arranged before the gear mechanism (4), preferably on the input shaft.

3. Soil processing apparatus according to claim 1,
**characterized in that**
the measuring equipment (15) is designed as a component of the gear mechanism (4).

4. Soil processing apparatus according to claim 1,
**characterized in that**
both the soil processing apparatus (1) as well as the tractor (12) are each equipped with a job calculator (21, 22) connected to each other by way of a BUS system, that an input unit (23) for inputting the required operating parameters is provided and that the power take-off shaft coupling of the tractor (12) is designed as an electromagnetically operable power take-off shaft coupling.

5. Soil processing apparatus according to claim 5
**characterized in that**
the power take-off shaft coupling of the tractor (12) is, after interruption of operation, designed only to be manually re-activatable, preferably by pressing a button.

6. Soil processing apparatus according to claim 1,
**characterized in that**
the measuring equipment (15) can be set with regard to the predetermined torque value via a GPS system and is designed to adapt this value in a partial area-specific manner via a field chart to the soil conditions present in the relevant field area.

7. Soil processing apparatus according to claim 1,
**characterized in that**
the measuring equipment (15) is designed to generate the signal for interrupting the drive torque of the power take-off shaft coupling of the tractor (12) depending on the number of revolutions and/or depending on the increase in the drive torque value over time.

8. Soil processing apparatus according to claim 1,
**characterized in that**
the measuring equipment (15) can also be adjusted manually, preferably in percentage stages, with regard to the torque value.

9. Soil processing apparatus according to claim 1,
**characterized in that**
the measuring equipment (15') is designed to record the voltage in the gear mechanism casing (5) which on reaching a limit voltage brings about a separation of the power take-off shaft coupling of the tractor (12) and thereby an interruption of the drive torque via a BUS system with job calculator (21, 22).

## Revendications

1. Appareil de traitement de sol (1) avec des outils de travail rotatifs (2), avec une chaîne cinématique (3) qui se compose d'un train d'engrenages (4) avec arbre d'entrée et arbre de sortie, étant donné que les outils de travail rotatifs (2) sont entraînés par l'intermédiaire de l'arbre de sortie, et avec un arbre articulé (10) qui est formé de manière à pouvoir être relié d'une part à l'arbre d'entrée du train d'engrenages (4) et, d'autre part, à l'arbre de prise de force d'un tracteur (12), et avec un limiteur de charge qui limite le couple d'entraînement initié dans le train d'engrenages (4),
**caractérisé en ce que**
est affectée à la chaîne cinématique (3) un équipement de mesure (15) ou organe qui saisit le couple d'entraînement et, quand une valeur, pouvant être définie au préalable, du couple est atteinte ou dépassée, interrompt le couple d'entraînement par l'intermédiaire de l'accouplement de prise de force du tracteur (12) ou un autre dispositif disposé côté tracteur et transmettant le couple d'entraînement du tracteur (12), étant donné que le dispositif transmettant le couple d'entraînement du tracteur (12) est formé comme un dispositif de commutation affecté à la chaîne cinématique qui provoque un inversement bref du sens de rotation des outils de travail (2) quand la valeur, pouvant être définie au préalable, du couple est atteinte ou dépassée.

2. Appareil de traitement de sol selon la revendication 1,
**caractérisé en ce que**
L'équipement de mesure (15) est réalisé comme partie intégrante de l'arbre articulé (10) ou comme moyeu de mesure (20) qui est disposé en amont du train d'engrenages (4), de préférence sur l'arbre d'entrée.

3. Appareil de traitement de sol selon la revendication 1,
**caractérisé en ce que**
l'équipement de mesure (15) est réalisé comme partie intégrante du train d'engrenages (4).

4. Appareil de traitement de sol selon la revendication 1,
**caractérisé en ce que**
aussi bien l'appareil de traitement de sol (1) que le tracteur (12) sont équipés chacun d'un calculateur de tâches (21, 22) qui sont reliés l'un avec l'autre par l'intermédiaire d'un système de bus, **en ce qu'**une unité de saisie (23) et prévue pour la saisie des paramètres de service nécessaires, et **en ce que** l'accouplement de prise de force du tracteur (12) est réalisé comme accouplement de prise de force pouvant être commandé électromagnétiquement.

5. Appareil de traitement de sol selon la revendication 5,
**caractérisé en ce que**
L'accouplement de prise de force du tracteur (12) ne peut être réactivé que manuellement après une interruption de l'entraînement, de préférence en appuyant sur un bouton.

6. Appareil de traitement de sol selon la revendication 1,
**caractérisé en ce que**
l'équipement de mesure (15) peut être réglé par l'intermédiaire d'un système GPS en ce qui concerne la valeur de couple à prédéfinir, ce dernier pouvant alors s'adapter spécifiquement en fonction des surfaces partielles par l'intermédiaire d'une carte de champ aux conditions de sol qui prévalent dans le champ chaque fois concerné.

7. Appareil de traitement de sol selon la revendication 1,
**caractérisé en ce que**
l'équipement de mesure (15) génère le signal pour l'interruption du couple d'entraînement de l'accouplement de prise de force du tracteur (12) en fonction de la vitesse de rotation et/ou en fonction de l'accroissement temporel de la valeur du couple d'entraînement.

8. Appareil de traitement de sol selon la revendication 1,
**caractérisé en ce que**
l'équipement de mesure (15) peut également être réglé manuellement en ce qui concerne la valeur du couple, de préférence en niveaux de pourcentage.

9. Appareil de traitement de sol selon la revendication 1,
**caractérisé en ce que**
l'équipement de mesure (15') est réalisé de manière à saisir la tension dans le carter d'engrenages (5), laquelle tension provoque, lorsqu'une tension limite est atteinte, la séparation de l'accouplement de prise de force du tracteur (12) et, ainsi, une interruption du couple d'entraînement par l'intermédiaire d'un système de bus avec calculateur de tâches (21, 22).
